# FASCICULE DE BREVET EUROPEEN

(11) **EP 0 978 746 B1**
(45) Date de publication et mention de la délivrance du brevet: **19.12.2007**
(21) Numéro de dépôt: 99420159.8
(22) Date de dépôt: 12.07.1999
(51) Int. Cl.: G02B 6/44

(54) **Dispositif de raccordement de câbles à fibres optiques**
Verbindungsvorrichtung für faseroptische Kabel
Connection device for fibre optical cables

(30) Priorité: 04.08.1998 FR 9810171
(43) Date de publication de la demande: 09.02.2000
(73) Titulaire: POUYET S.A., 94207 Ivry sur Seine (FR)
(72) Inventeur: Naudin, Thierry, 44700 Orvault (FR); Brunet, Hervé, 44600 Saint Nazaire (FR); Corbille, Christophe, 44460 Saint Nicolas de Redon (FR)
(74) Mandataire: Vuillermoz, Bruno

(56) Documents cités:
- EP-A- 0 589 618
- EP-A- 0 797 114
- WO-A-95/02203
- WO-A-97/32231
- FR-A- 2 758 400
- US-A- 4 373 776
- US-A- 5 071 220
- US-A- 5 323 480
- US-A- 5 598 500

## Description

La présente invention se rapporte à un dispositif de raccordement de cables a fibres optiques. Elle se rapporte en particulier à un boîtier étanche de raccordement de câbles à fibres optiques, dit boîtier à « organiseur optique ». Elle se rapporte également à un organiseur optique, en particulier apte à équiper un tel boîtier.

Un boîtier à organiseur optique se compose d'un boîtier étanche, comportant un fond fixe et un couvercle amovible, qui reçoit au moins deux câbles à fibres optiques et qui au moins contient une ou plusieurs cassettes de stockage des épissures et des sur-longueurs de fibres optiques, ainsi que souvent un moyen de stockage des fibres qui sont en attente d'utilisation, sur par exemple un « câble en passage », c'est-à-dire un câble passant simplement à travers le boîtier avec ses fibres dégagées et éventuellement dénudées, en attente d'utilisation, dans ce boîtier.

Finalement un tel boîtier, et son contenu, constitue une architecture de divers éléments qui doivent exécuter les quatre fonctions suivantes :
■ Fonction I : amarrage et étanchéité d'entrée des câbles optiques
■ Fonction II : orientation des fibres optiques vers l'organiseur optique proprement dit
■ Fonction III : stockage, dans des cassettes de stockage équipant l'organiseur proprement dit, des épissures et des sur-longueurs de fibres optiques
■ Fonction IV : stockage éventuel des fibres en attente, en particulier dans le cas d'un « câble en passage ».

L'architecture des boîtiers organiseurs actuellement commercialisés par la société demanderesse comprend, à l'intérieur de la boîte, un plateau métallique d'amarrage des câbles optiques, suivi d'une zone d'orientation des fibres optiques et de stockage des fibres en attente, elle-même surmontée d'un plateau métallique de réception des cassettes de stockage des épissures et des sur-longueurs de fibres optiques.

Le document WO- 97/ 32.231 décrit un organiseur optique, apte à être placé dans un boîtier. Plusieurs entrées sont prévues sur une face du boîtier pour le passage de câbles à fibres optiques. L'organiseur comprend une plaque de support et des cassettes de stockage de fibres optiques. Les cassettes sont empilées à l'intérieur du boîtier, en étant décalées et inclinées les unes par rapport aux autres. Les cassettes sont maintenues en place sur la plaque par encliquetage. Des moyens de guidage destinés aux fibres optiques sont ménagés dans la plaque.

Le document US- 5.323.480 décrit un support d'épissures de fibres optiques sous la forme d'un organiseur optique inséré dans un boîtier. Plusieurs entrées sont prévues sur une face du boîtier pour le passage de câbles à fibres optiques. L'organiser comprend une embase, et des cassettes de stockage de fibres optiques. Les cassettes sont empilées à l'intérieur du boîtier, en étant décalées. Les cassettes sont maintenues contre l'embase et sont aptes à pivoter par rapport à cette embase. Un espace pour le stockage de fibres optiques est ménagé à l'arrière entre la dernière cassette et l'embase.

L'invention a pour objet de proposer un boîtier étanche organiseur optique qui est, en particulier, plus compact, plus simple, plus universel car modulable et donc capable d'accepter un nombre de cassettes choisi en fonction des besoins, plus convivial et pratique par une meilleure facilité de montage et d'utilisation, que les dispositifs de ce type connus jusqu'alors. Elle a également pour objet de proposer un organiseur optique pratique, simple, modulable, et fonctionnel, cet organiseur optique étant en particulier apte à équiper un tel boîtier.

Elle se rapporte à cet effet à un dispositif étanche destiné au raccordement de câbles à fibres optiques comme défini dans la revendication 1.

Préférentiellement, l'invention se rapporte à un tel dispositif, caractérisé en ce que chacun de ces dispositifs respectifs d'entrée de câble comprend :
- à l'avant : une semelle d'amarrage rigide comprenant des orifices ou fentes d'introduction des mèches de renfort, centrales et/ou latérales, du câble, ces orifices ou fentes coopérant chacun avec un organe de serrage, agissant typiquement par rotation d'une vis, de la ou des mèches qu'il reçoit,
- à l'arrière : un écrou de serrage de presse-étoupe qui est en outre conformé pour recevoir un organe de bridage de la gaine extérieure du câble optique, et
- entre l'avant et l'arrière : un corps tubulaire d'étanchéité dont la partie avant s'encastre de manière télescopique dans ladite semelle d'amarrage, des moyens de solidarisation de ce corps d'étanchéité et de cette semelle d'amarrage en position encastrée étant prévus, la partie arrière de ce corps tubulaire formant, en association avec une bague d'étanchéité, le presse-étoupe d'étanchéité complémentaire dudit écrou de serrage, ce presse-étoupe venant réaliser l'étanchéité par serrage sur la gaine extérieure du câble,
ce corps d'étanchéité recevant par ailleurs un moyen de réalisation de l'étanchéité par rapport au passage d'entrée dans le boîtier, et comportant par ailleurs un organe de butée qui est destiné à limiter, par coopération avec une forme complémentaire dudit passage d'entrée, l'introduction du dispositif d'entrée étanche par sa partie avant à travers le passage d'entrée, la position de butée étant alors telle que la tête du dispositif émerge à l'intérieur du boîtier, un moyen de clavetage étant à ce stade prévu pour verrouiller le dispositif en cette position.

Avantageusement, ledit second espace libre est conçu pour recevoir au moins une cassette de lovage desdites fibres en attente.

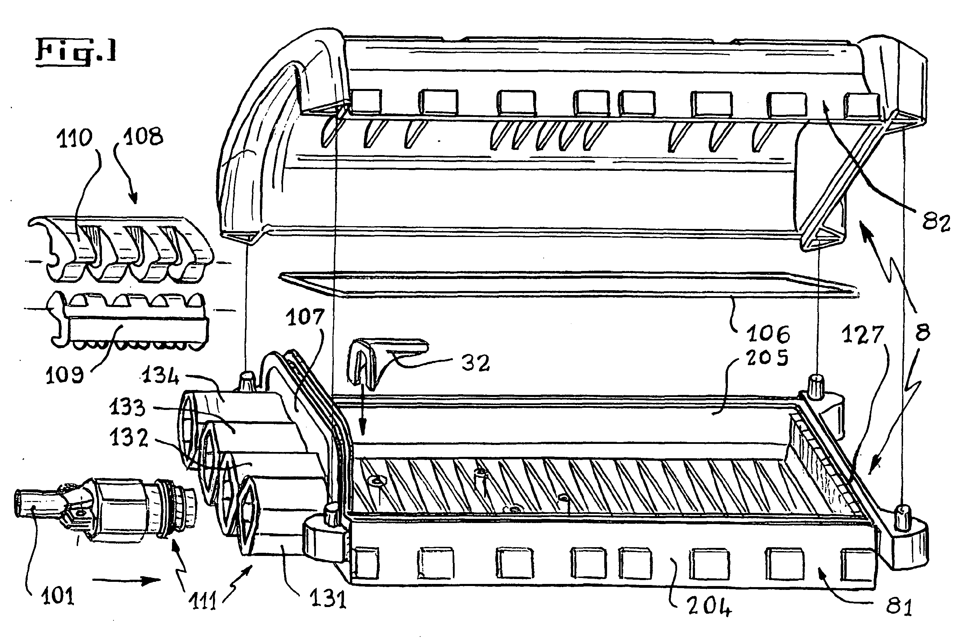

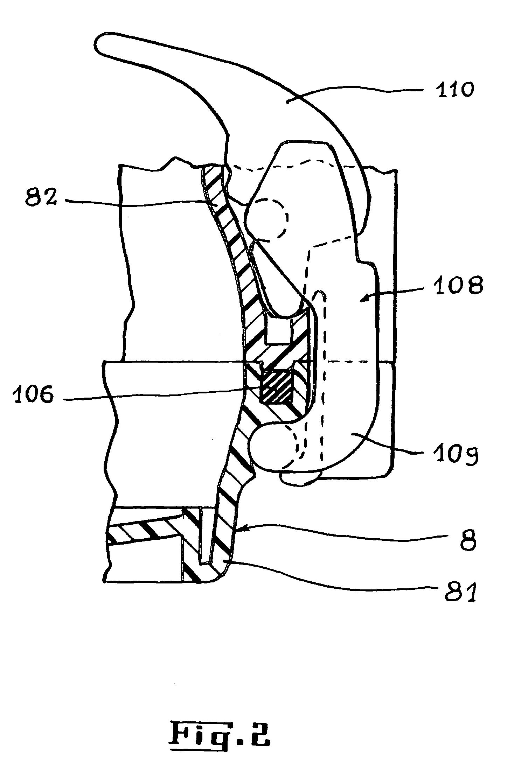

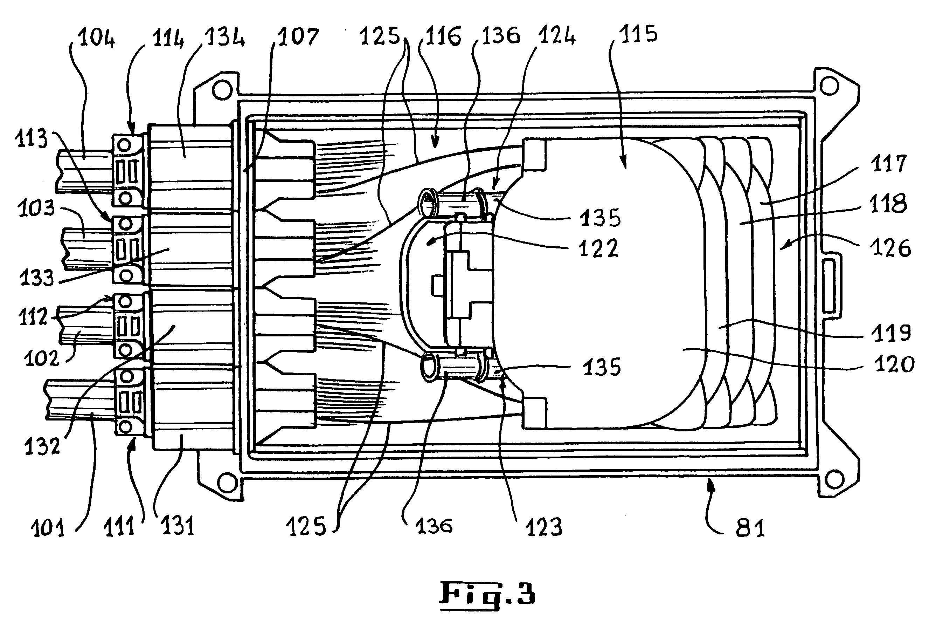

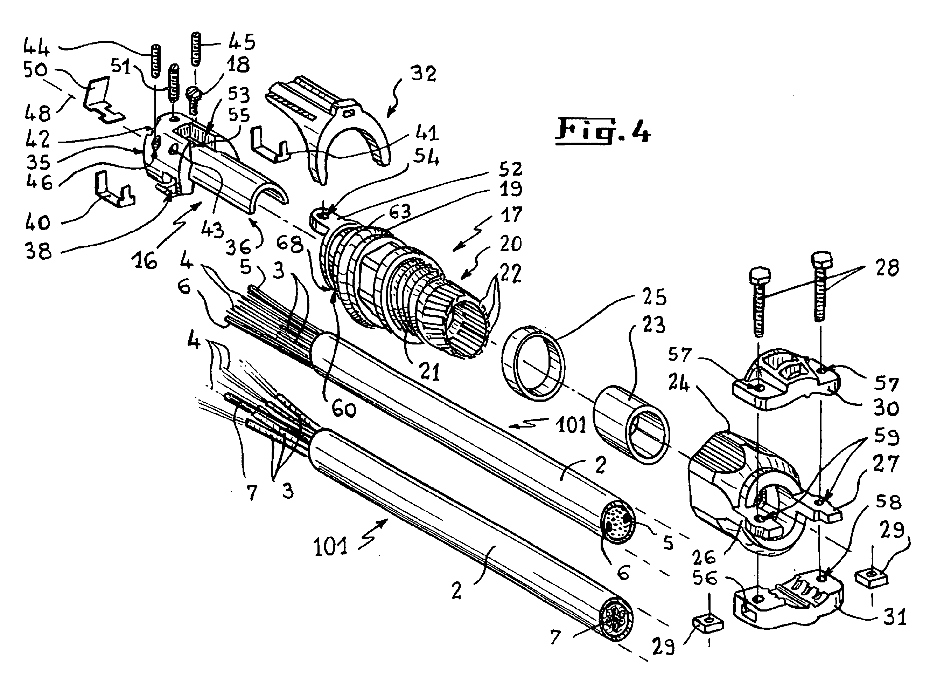

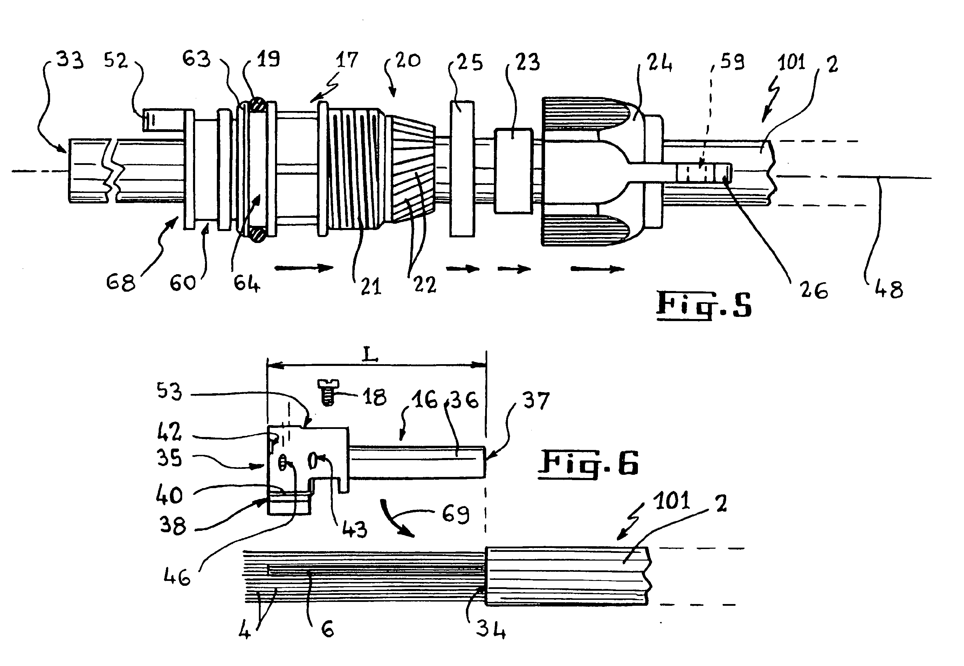

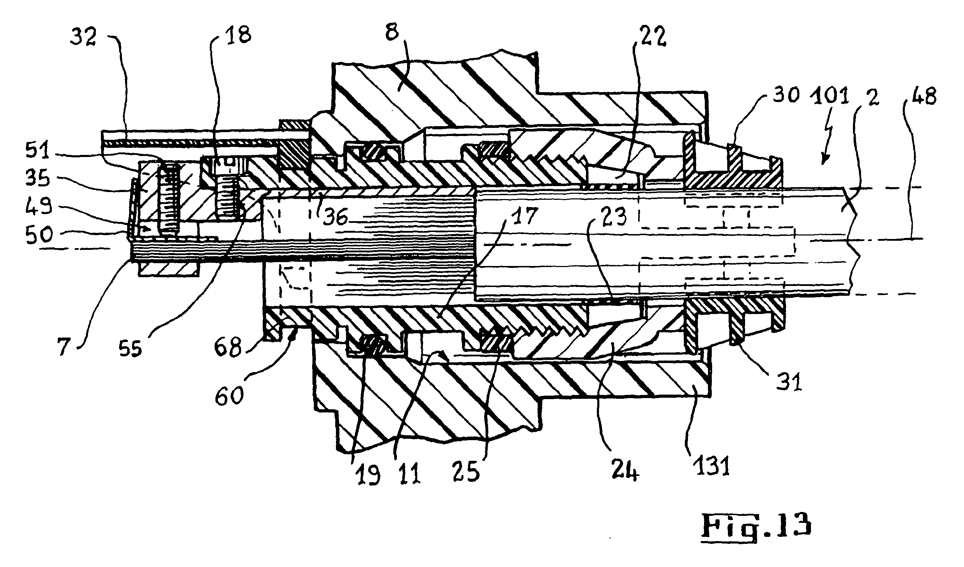

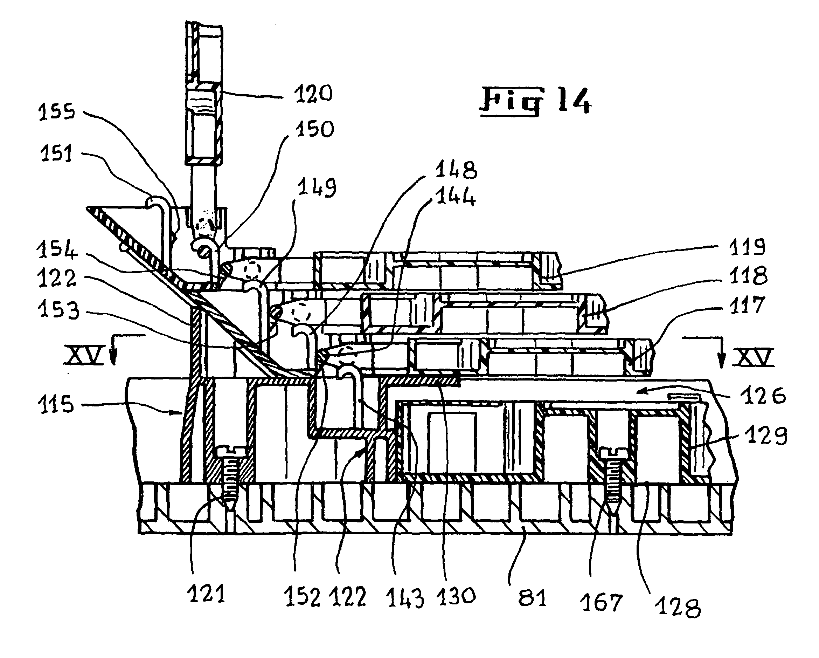

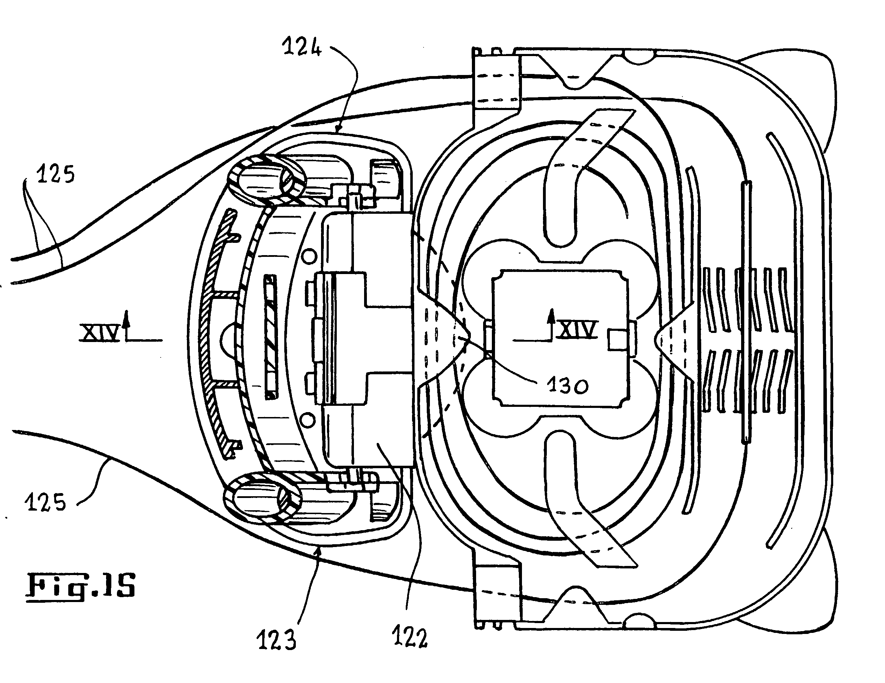

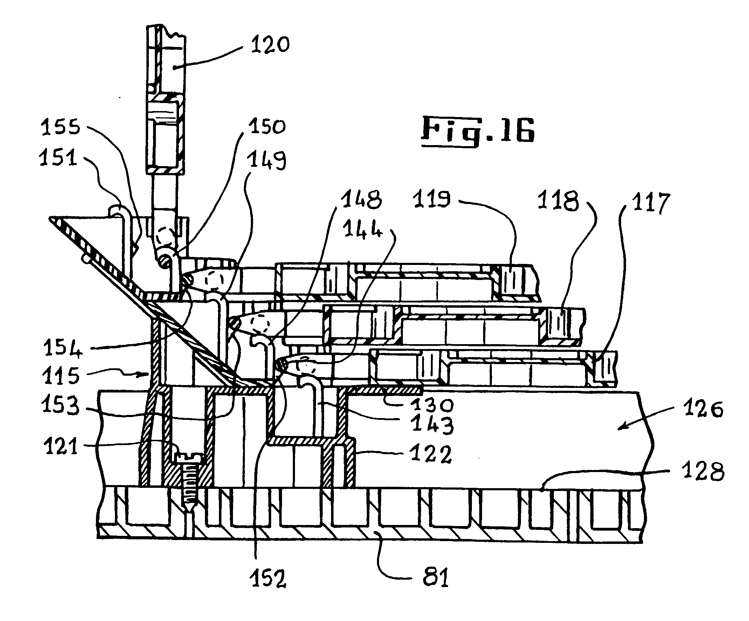

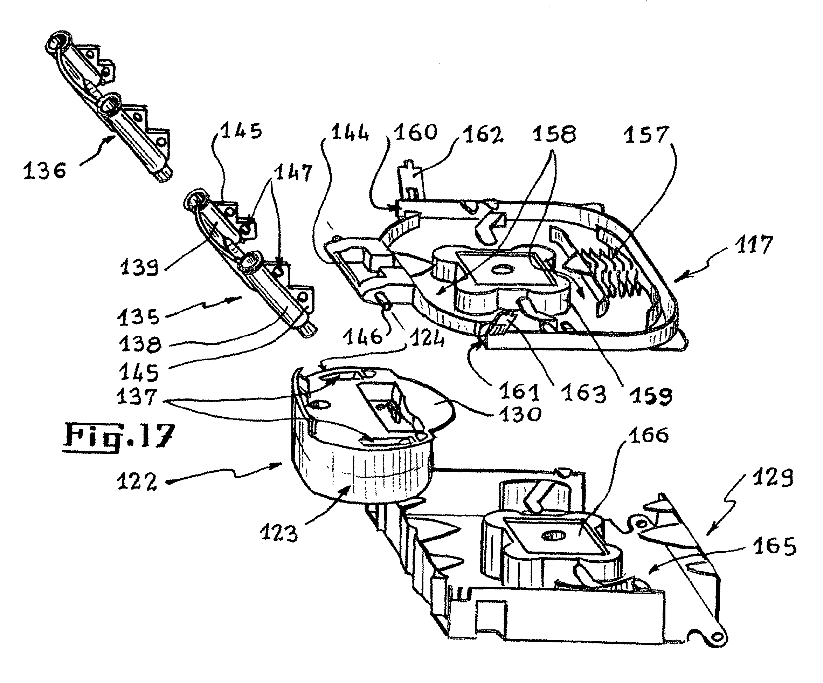

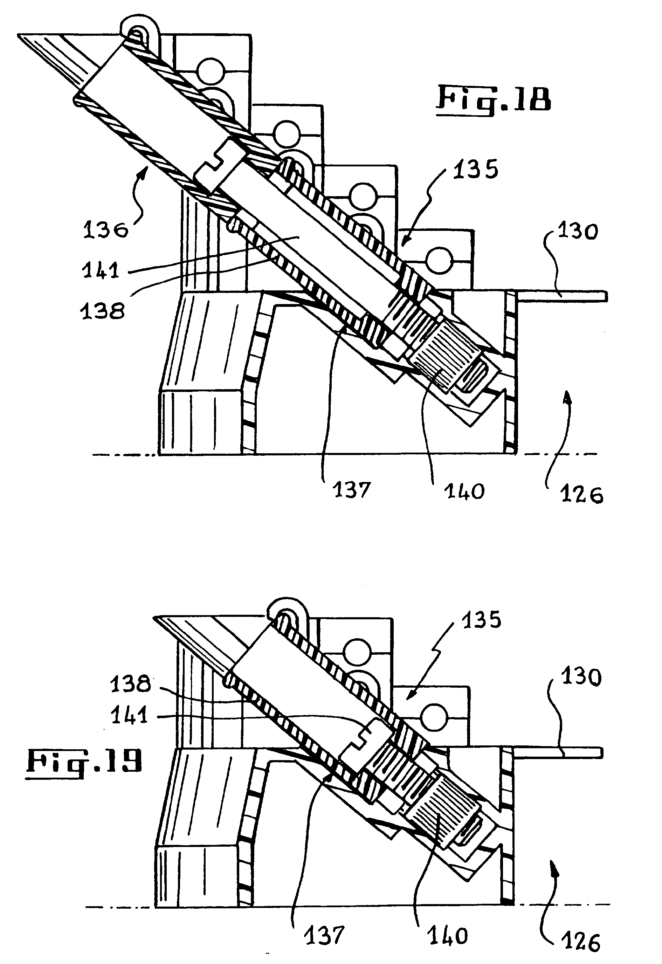

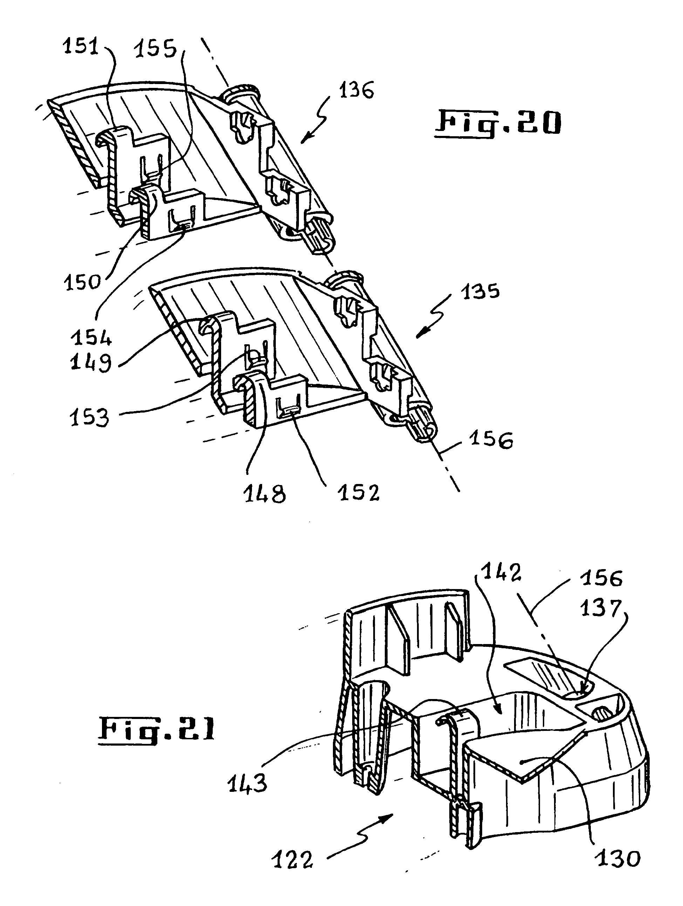

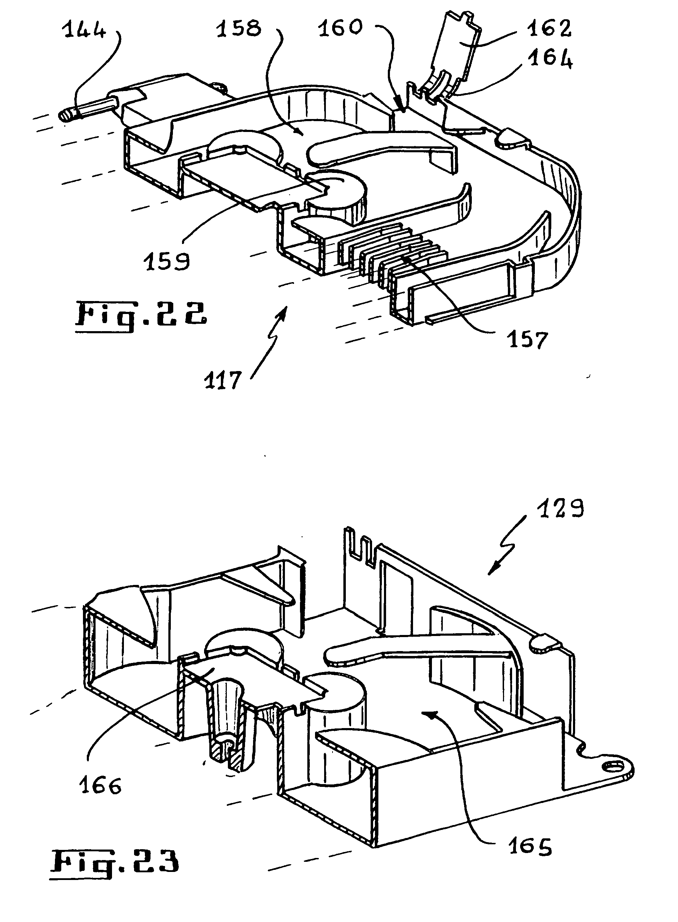

De toute façon, l'invention sera bien comprise, et ses divers avantages et caractéristiques ressortiront mieux, lors de la description suivante d'un exemple non limitatif de réalisation, en référence au dessin schématique annexé dans lequel :
■ Figure 1 est une perspective, partielle et simplifiée, du boîtier vide, donc sans l'organiseur optique proprement dit.
■ Figure 2 est une vue en coupe d'un des dispositifs de fermeture de ce boîtier
■ Figure 3 est une vue en plan de ce boîtier à organiseur optique, couvercle enlevé
■ Figure 4 est une perspective éclatée d'un dispositif d'entrée de câble
■ Figures 5 à 12, ainsi que leurs compléments 7A, 7B, 7C, et 12A, schématisent les phases successives de montage et mise en place de ce dispositif d'entrée de câble
■ Figure 13 est une coupe verticale, axiale et longitudinale, de ce dispositif d'entrée de câble, monté et mis en place
■ Figure 14 est une coupe longitudinale et verticale, selon XIV-XIV de Figure 15, de l'organiseur optique proprement dit
■ Figure 15 est une coupe horizontale, selon XV-XV de Figure 14, de cet organiseur optique, le fond du boîtier n'étant toutefois pas représenté
■ Figure 16 est une vue semblable à Figure 14, sans la cassette de lovage
■ Figure 17 est une perspective éclatée de l'organiseur optique, sans fibres optiques installées et avec une seule cassette de stockage d'épissures et sur-longueurs
■ Figure 18 est une coupe longitudinale et verticale du piédestal dans lequel deux modules gigogne sont enfichés, cette coupe passant par l'un des deux axes inclinés d'enfichage et montrant la vis commune de maintien
■ Figure 19 est une semblable à Figure 18, mais appliquée au cas où un seul module est enfiché
■ Figure 20 est une demi-perspective coupée des deux supports de cassettes de la figure 17
■ Figure 21 est une demi-perspective coupée du piédestal
■ Figure 22 est une demi-perspective coupée d'une cassette basculante de stockage des épissures et sur-longueurs de fibres
■ Figure 23 est une demi-perspective coupée de la cassette de lovage.

En se référant tout d'abord aux figures 1 à 3, et 14 à 16, il s'agit d'un dispositif étanche de raccordement de quatre câbles 101, 102, 103, 104, à fibres optiques. En termes du métier, un tel dispositif est appelé « boîtier à organiseur optique ».

Un tel boîtier, et son contenu, constitue une architecture de divers éléments qui doivent exécuter les quatre fonctions suivantes :
■ Fonction I : amarrage et étanchéité d'entrée des câbles optiques
■ Fonction II : orientation des fibres optiques vers l'organiseur optique proprement dit
■ Fonction III : stockage, dans des cassettes de stockage équipant l'organiseur proprement dit, des épissures et des sur-longueurs de fibres optiques
■ Fonction IV : stockage éventuel des fibres en attente, en particulier dans le cas d'un « câble en passage ».

Les figures 1 et 2 s'attachent à montrer plus particulièrement le boîtier vide, ou contenant, 8, et son système de fermeture 108, l'organiseur optique proprement dit n'étant pas encore mis en place dans ce boîtier 8.

Le boîtier 8 comporte un fond 81 qui est plat et à section horizontale sensiblement rectangulaire, et un couvercle 82 qui s'adapte sur ce fond 81 avec interposition d'un joint d'étanchéité 106.

Sur ces deux grands côtés, le fond 81 présente des bords 204 et 205 qui sont très peu relevés, de l'ordre du centimètre pour fixer les idées, ceci pour autoriser une bonne accessibilité latérale à l'organiseur optique proprement dit.

En revanche, le petit côté qui reçoit, en épi, les quatre entrées 111 à 114 respectives des quatre câbles 101 à 104 a son bord 107 bien plus relevé, afin de ménager la place nécessaire pour ces quatre entrées en épi.

Comme il sera décrit en détail ci-après, chaque dispositif d'entrée de câble se monte préalablement, à l'extérieur du boîtier 8, sur chaque câble tel que le câble 101, puis l'ensemble ainsi monté est introduit dans un manchon d'entrée respectif 131 à 134 jusqu'à y venir en butée, puis verrouillé à l'aide d'une clavette respective (ou éventuellement commune à plusieurs câbles) 32.

La hauteur du couvercle 82 est adaptée à celle de l'organiseur optique, qui est modulable comme on le verra ci-après, et, ce qui est fort pratique, ce couvercle 82 se verrouille (figure 2) au moyen de quelques fermetures à grenouillère 108 composées chacune de deux éléments 109 et 110 classiquement articulés l'un sur l'autre.

La figure 3 donne une idée globale de l'architecture de ce boîtier à organiseur optique.

La fonction I précitée (amarrage et étanchéité d'entrée des câbles optiques) est tout simplement réalisée par les quatre dispositifs d'entrée de câble 111 à 114, qui sont tous quatre disposés, côte à côte et dans un même plan horizontal, c'est-à-dire « en épi », sur un même petit côté 107 du fond de boîtier 81. Un de ces dispositifs d'entrée de câble sera décrit ci-après en référence aux figures 4 à 13.

La fonction II précitée (orientation des fibres optiques vers l'organiseur proprement dit 115) est réalisée, simplement et sans nécessité de « sur-tubage » des fibres optiques dénudées, d'une part par la présence d'un espace libre de transition 116, sans parties métalliques, qui fait suite aux entrées de câbles 111 à 114, et d'autre part par le fait que les cassettes basculantes 117 à 120 qui équipent l'organiseur 115 sont portées par un piédestal en matière plastique 122 dont la forme est arrondie au moins dans ses parties latérales 123 et 124 (voir aussi la figure 15) afin de guider « en douceur » les fibres optiques 125 sans risquer de les blesser au cas où, comme c'est le cas représenté sur la figure 3, elles sont dénudées sans qu'on les ait « sur-tubées » (c'est-à-dire : sans qu'on les ait chacune revêtues d'un petit tube souple de protection mécanique).

La fonction III précitée est classiquement réalisée par les cassettes 117 à 120, qui n'ont globalement, en ce qui concerne cette fonction du moins, rien de très original, à quelques détails près qui seront exposés ultérieurement.

La fonction IV précitée est réalisée (figure 14 et 16) par la présence d'un second espace libre 126 qui est situé entre le piédestal 122 et le petit côté 127 (figure 1) opposé au petit côté 107, cet espace libre 126 étant situé sous la cassette 117 de dessous de l'empilage de cassettes 117-120 lorsque cette cassette 117 est en sa position horizontale (parallèle au plan de fond 128 du boîtier) représentée en figures 14 et 16.

Sur la figure 16, l'espace 126 est gardé totalement vide, et il peut ainsi recevoir des fibres en attente, spécialement soit des fibres non-dénudées, soit des fibres dénudées mais « sur-tubées ».

Sur la figure 14 au contraire, l'espace 126 reçoit une cassette de lovage 129 de fibres dénudées « en attente ». Une telle cassette de lovage 129 est représentée en perspective sur les figures 17 et 23.

On décrit maintenant plus en détails, en référence aux figures 4 à 13, un des quatre dispositifs d'entrée de câble 111 à 114, en l'occurrence le dispositif d'entrée de câble 111 qui est relatif au câble 101.

Le câble 101 comporte une solide gaine extérieure semi-rigide 2 qui protège un ensemble de petits tubes souples 3 qui contiennent chacun quelques fibres optiques 4 elles-mêmes souvent noyées dans une graisse de protection et d'étanchéité.

En outre sont prévus, dans la gaine 2, deux mèches de renfort semi-rigides 5, 6, en fibres d'Aramide par exemple, qui sont appelées «renforts périphériques » parce qu'elles sont positionnées plutôt à proximité de la gaine 2, de part et d'autre de l'axe longitudinal médian du câble optique 101.

A l'extrémité libre du câble 101, on a dénudé le câble, c'est-à-dire enlevé la gaine 2, les petits tubes de protection, et la graisse d'étanchéité.

La solide gaine extérieure 2, les mèches de renfort 5, 6, les petits tubes 3, et la graisse d'enrobage des fibres 4, sont des protections mécaniques des fibres optiques 4 qui sont rendues nécessaires du fait que les fibres optiques ne peuvent supporter aucune contrainte mécanique.

Au lieu d'utiliser, pour assurer la tenue mécanique du câble optique 101, des mèches de renfort semi-rigides et latérales 6, 5, il est aussi possible d'utiliser, comme on l'a schématisé à titre illustratif sur cette figure 4 ainsi que sur la figure 13, un renfort semi-rigide axial et central 7, et des mèches de renfort latérales souples (non représentées), tout ceci étant bien connu de l'Homme de l'Art.

A noter qu'en langage du métier, la mèche semi-rigide axiale et centrale 7 est appelée « porteur central », et que le câble dénudé comme en figure 4 est dit « préparé ».

Compte tenu de la fragilité mécanique des fibres optiques, il est nécessaire de prévoir, pour une entrée étanche de câble optique dans une chambre ou dans un contenant, non seulement des moyens d'étanchéité, mais encore de solides moyens d'amarrage de la gaine extérieure 2 du câble ainsi que de ses mèches de renfort telles que les renforts périphériques 5, 6 ou le porteur central 7 et ses mèches périphériques souples associées.

A la partie avant du dispositif, c'est-à-dire à l'extrémité la plus en aval par rapport au sens d'introduction du câble optique 101 dans le boîtier de raccordement 8, on trouve une semelle métallique d'amarrage 16.

Cette semelle d'amarrage 16 vient s'enficher, de manière télescopique comme on le voit sur le dessin et comme on l'expliquera plus en détails ci-après, dans un corps tubulaire d'étanchéité 17, en matière plastique, ces deux éléments 16 et 17 se solidarisant alors à l'aide d'une vis de verrouillage 18.

Ce corps d'étanchéité 17 reçoit un joint d'étanchéité torique externe 19, et si sa partie avant 68 est conformée pour recevoir la semelle d'amarrage 16, sa partie arrière 20 est conformée en presse-étoupe, avec un filetage 21 et des lamelles d'appui 22 qui coopèrent, classiquement en soi, avec un joint annulaire d'étanchéité 23 en rapport ajusté avec le diamètre du câble 101 et un écrou très spécial de serrage 24 de section externe hexagonale, pour venir se serrer sur la gaine extérieure 2 du câble 101.

Les câbles optiques pouvant être de différents diamètres, il est fourni, également en rapport ajusté avec le diamètre du câble 101 utilisé, un anneau rigide de compensation 25 qui s'enfile sur le filetage 21 et qui permet en conséquence de limiter à sa juste valeur le serrage de l'écrou 24, ce dernier venant buter sur l'anneau 25 en fin de course de serrage.

A sa partie arrière, l'écrou 24 possède par ailleurs deux pattes longitudinales et latérales 26, 27 qui reçoivent, par l'intermédiaire de deux vis 28 et de deux écrous associés 29, les deux moitiés 30, 31 d'un étrier de bridage mécanique du câble 101 par serrage de cet étrier sur la gaine extérieure 2 de ce câble.

Il est enfin prévu une clavette en forme de fourchette semi-rigide 32, qui est destinée au verrouillage du dispositif lorsque ce dernier est monté sur le câble 101 et finalement mis en place dans le boîtier 8.

Tous ces éléments, clairement visibles sur la figure 4, du dispositif d'entrée de câble viennent d'être décrits rapidement. La description, qui va suivre, des phases successives de montage et mise en place de ce dispositif permettra de préciser les détails manquants.

En se référant à la figure 5, l'extrémité libre 33 du câble 101 étant sectionnée à la bonne longueur mais n'étant pas encore dénudée, on commence par enfiler successivement sur ce câble l'écrou de presse-étoupe très particulier 24, le joint annulaire 23 et l'anneau de compensation 25 si nécessaire, puis le corps d'étanchéité tubulaire 17 préalablement garni du joint torique 19.

La pièce 17 est réalisée en une matière plastique qui, tout en étant très rigide, garde toutefois une souplesse suffisante pour permettre aux lamelles de presse-étoupe 22 de venir serrer le joint annulaire 23 lorsque l'on visse l'écrou de presse-étoupe 24 (dont, comme on le voit sur la figure 13, la section interne est classiquement de forme tronconique) sur son filetage de réception 21. La matière plastique utilisée pour ceci est par exemple un Polyamide non chargé.

Puis, selon Figure 6, on procède à la « préparation » du câble 101. Pour ceci, on le dénude, à partir de l'endroit choisi 34 pour laisser libre la longueur de fibres optiques 4 souhaitée à l'intérieur de la boîte 8, de sa gaine extérieure 2 et de ses petits tubes de protection 3, et l'on dégraisse les fibres optiques 4 ainsi mises à nu. On sectionne par ailleurs les mèches de renfort 5, 6 de façon qu'elles ne dépassent du plan transversal de dénudage 34 que d'une longueur sensiblement égale à la longueur L de la semelle d'amarrage 16.

La semelle métallique 16 se compose (voir aussi la figure 4), d'un seul bloc, d'une tête 35 qui est destinée, comme on le verra ci-après, à réaliser l'amarrage des renforts périphériques, par exemple les renforts 5 et 6, ainsi que du porteur central 7 (figure 13) s'il existe, et d'une queue 36 en forme de demi-cylindre à section semi-circulaire. Cette queue 36 viendra, comme décrit ci-après, s'enficher étroitement dans l'orifice tubulaire formé à la moitié avant 68 du corps d'étanchéité 17.

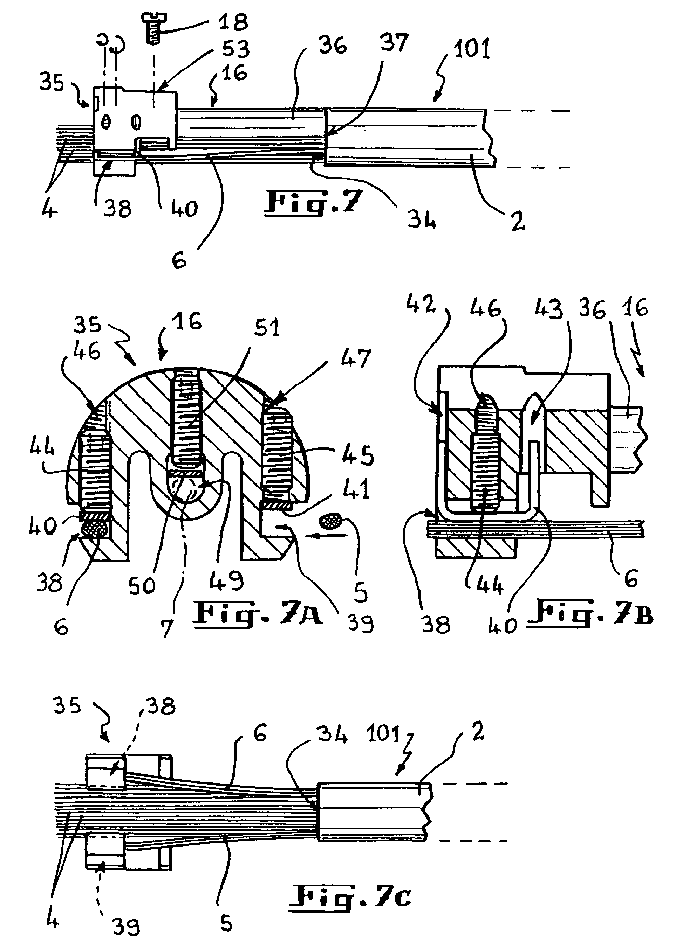

Comme indiqué par la flèche 69 sur la figure 6 et comme on le voit sur la figure 7, on positionne alors la semelle d'amarrage 16 de manière contiguë à l'extrémité non dénudée du câble 101, c'est-à-dire de sorte que le plan transversal de dénudage 34 et le plan transversal 37 de l'extrémité arrière de la queue 36 soient sensiblement confondus en un seul et même plan transversal, vertical sur le dessin.

On procède alors, selon les figures 7 à 7C, à l'amarrage des deux renforts périphériques 5 et 6 du câble dans la tête 35 de la semelle d'amarrage 16.

Pour permettre un tel amarrage, cette tête 35 est pourvue (voir en particulier les figures 4, 7A à 7C) de deux encoches latérales 38, 39 d'introduction latérale des renforts périphériques 6 et 5.

Dans chacune de ces encoches 38, 39 est placé un étrier métallique en « U », respectivement 40 et 41, qui est monté coulissant du haut vers le bas, le long d'une saignée verticale de guidage 42 et d'un orifice vertical de guidage 43. En vissant chacune des deux vis verticales respectives 44 et 45 dans leurs orifices taraudés verticaux respectifs 46 et 47, on fait progressivement descendre les étriers 40 et 41 qui viennent alors presser fortement, sans les blesser, chacun des deux renforts périphériques 6 et 5 préalablement introduits dans les encoches respectives 38 et 39.

A noter que la tête 35 est aussi conformée pour amarrer le porteur central éventuel 7 (figure 13). Pour ceci, la tête 35 est percée, selon l'axe longitudinal médian 48 du dispositif, d'un orifice axial 49, à section oblongue dans le sens vertical, qui reçoit et maintient un autre étrier métallique d'amarrage 50 (figures 4 et 13). L'amarrage du porteur central 7 s'effectue, comme précédemment, en coinçant ce porteur central entre l'étrier 50 et la paroi du trou oblong 49 dans lequel le porteur central 7 a été préalablement introduit, ce qui est actionné là aussi par une vis verticale de serrage 51.

La présence des étriers 40, 41, 50 n'est pas obligatoire, et l'on pourrait se contenter, comme cela se fait pour des fils de cuivre, de bloquer les mèches de renfort 5, 6, et 7 à l'aide des vis correspondantes 44, 45, et 51. Ces étriers sont cependant ici très utiles car ils permettent d'amarrer solidement ces renforts 5, 6, 7 sans les blesser de manière dommageable pour la fiabilité de l'amarrage.

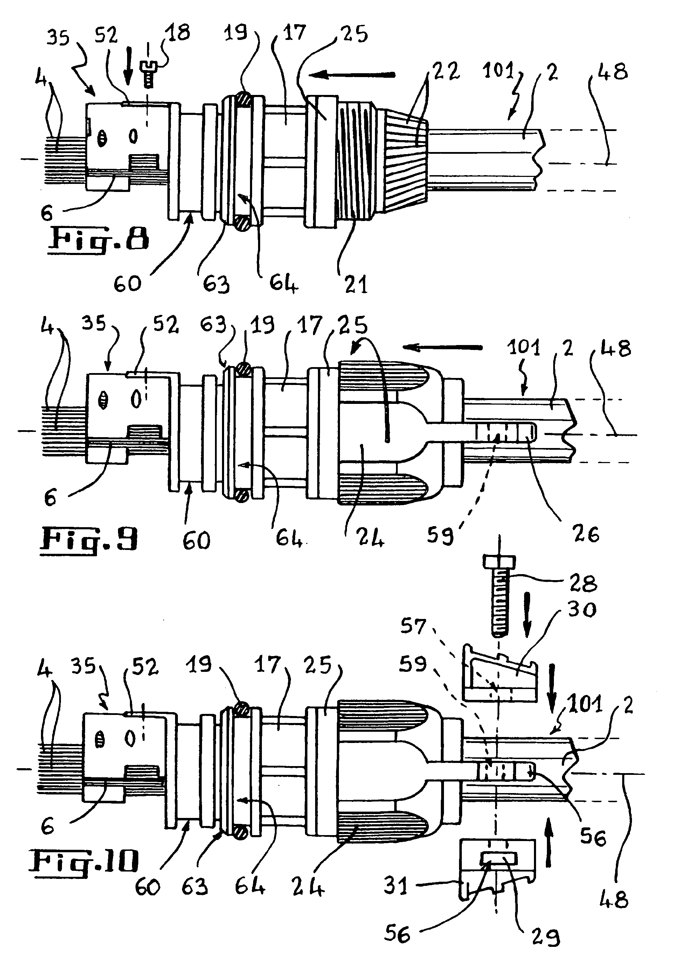

Cet amarrage des mèches de renfort 6, 5 étant ainsi effectué, on saisit le corps d'étanchéité tubulaire 17, et, selon Figure 8, on l'enfiche à fond sur la queue 36 de la semelle d'amarrage 16.

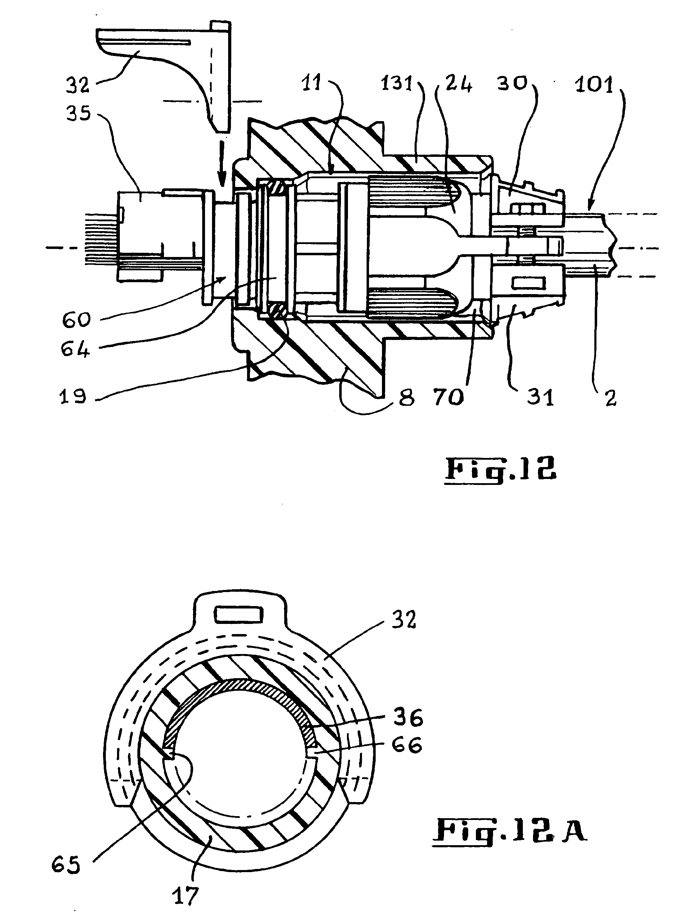

Pour optimiser et guider cette opération, le pourtour avant du corps d'étanchéité 17 est muni (figure 4) d'une proéminence longitudinale 52 qui vient s'enficher dans une encoche femelle longitudinale et conjuguée 53 de la tête 35 de la semelle métallique d'amarrage 16. En outre, deux nervures latérales 65, 66 (figure 12A) de la paroi interne cylindrique du corps 17 participent au guidage du corps 17 lorsqu'il coulisse sur la queue 36 de la semelle métallique 16.

On solidarise ensuite la semelle 16 et le corps 17 au moyen de la vis 18 qui passe à travers un orifice vertical 54 de la proéminence 52 et vient se visser dans un taraudage vertical 55 de la tête 35 (figures 4 et 13), ce taraudage 55 et cet orifice 54 étant alors coaxiaux.

Après s'être assuré que le joint d'étanchéité annulaire 23 et la rondelle de compensation 25 sont bien en place, on visse alors, selon Figure 9, l'écrou spécial 24 du presse-étoupe. L'étanchéité sur la gaine extérieure 2 du câble 101 est, comme mentionné précédemment, assurée lorsque l'écrou 24 est vissé jusqu'à arriver en butée contre la rondelle de compensation 25.

A noter que la forme externe hexagonale, à donc six pans, de l'écrou 24 permet, si on le souhaite, de le visser à l'aide d'une clé.

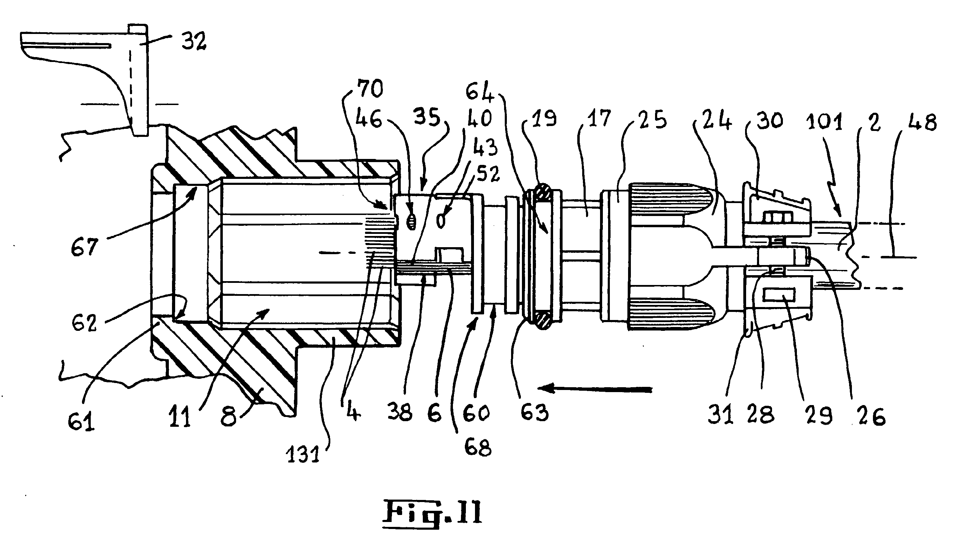

C'est alors (figures 10 et 11) que l'on réalise, à l'aide de l'étrier en deux moitiés 30, 31, des deux écrous 29 et des deux vis de serrage associés 28, le bridage du câble 101 sur les deux pattes arrière 26, 27 prévues spécialement à cet effet sur l'écrou spécial 24 du presse-étoupe.

Pour ceci, on introduit latéralement les deux écrous carrés 29 dans leurs cavités réceptrices respectives 56 de la moitié d'étrier inférieure 31, on met en place les deux moitiés d'étrier 30, 31 de façon que leurs orifices 57, 58 de passage des deux vis 28 coïncident avec des orifices 59, également de passage de ces deux vis, qui sont prévus sur chacune des pattes arrière 26, 27 de l'écrou de presse-étoupe 24. On introduit alors et visse les deux vis de bridage 28 jusqu'à brider solidement ensemble l'écrou 24, l'étrier 30, 31 et le câble 101 par sa gaine extérieure 2.

A noter que l'étrier 30, 31 est réalisé en une matière plastique très rigide, par exemple en Polyamide chargé en fibres de verre.

Le corps 17 et son écrou associé 24 sont par exemple en Polyamide chargé ou non, leur confèrant une très légère souplesse, indispensable au fonctionnement du presse-étoupe.

L'ensemble est alors ainsi, selon figure 11, entièrement préparé, amarré, et muni d'étanchéité, tout ceci étant avantageusement réalisé à l'extérieur de la boîte de raccordement 8.

L'opération suivante consiste, selon Figures 11 et 12, à introduire cet ensemble dans la boîte 8, par son passage d'entrée 11 prévu à cet effet, jusqu'à arriver en butée en une position (figure 12) où seules la tête 35 de la semelle métallique 16 et une gorge avant 60 du corps 17 dépassent du passage d'entrée 11 vers l'intérieur de la boîte 8, l'étanchéité d'entrée dans ce passage 11 étant réalisée par le joint torique précité 19.

Pour ceci, le passage d'entrée 11 a une forme particulière, conjuguée à cet effet de celle conférée au corps 17, cette forme particulière lui étant, dans cet exemple de réalisation et donc de façon nullement limitative en soi, conférée par celle du manchon d'entrée 131.

Comme on le voit sur le dessin (voir en particulier la figure 11), le passage d'entrée 11 présente à son extrémité avant un rétrécissement de section de sortie 61 qui, tout en autorisant le passage aisé de la tête 35 et de la gorge 60, définit un épaulement circulaire 62 qui, en coopération avec un épaulement annulaire conjugué 63 du corps 17, positionné un peu en amont de la gorge 60 comme représenté sur le dessin, sert de butée de fin de course lorsque l'on introduit l'ensemble dans l'orifice 11.

Le joint torique 19 est positionné dans une gorge annulaire 64 du corps 17, située ici juste avant l'épaulement de butée 63, et, en position de butée selon la figure 9, ce joint 19 est pressé entre cette gorge 64 et la paroi interne du passage 11, donc du manchon d'entrée 131, dont la section est, à cet endroit, ajustée en conséquence.

La moitié arrière 70 du passage d'entrée 11, c'est-à-dire la surface interne arrière du manchon d'entrée 131, a très avantageusement une forme hexagonale qui est la forme femelle conjuguée de la surface externe hexagonale de l'écrou de presse-étoupe 24. En position de butée selon la figure 12, l'écrou 24 est au moins partiellement introduit dans cette entrée hexagonale 70 du passage 11, ce qui le bloque en rotation, de sorte que ce dispositif d'entrée de câble va résister alors efficacement aux sollicitations extérieures de torsion qui peuvent éventuellement s'exercer ultérieurement sur le câble 101.

Il ne reste plus, selon Figures 12, 12A, et 13, qu'à mettre en place, par enclipsage dans la gorge 60, la fourchette, ou clavette, de verrouillage précitée 32. L'entrée de câble est alors totalement mise en place, bridée, verrouillée, et étanche, sans qu'il n'y ait plus, comme autrefois, à intervenir dans la boîte pour y réaliser par exemple un vissage souvent difficile à faire, et sans que l'étanchéité sur la gaine extérieure du câble ne soit réalisée comme autrefois en amont du point d'amarrage de ce dernier, avec la fragilisation qui en découlait.

Le montage et la mise en place de ce dispositif est particulièrement simple et convivial, ce qui facilite grandement la tâche de l'utilisateur, et de surcroît son encombrement longitudinal à l'intérieur de la chambre ou du contenant est notablement réduit.

On décrit maintenant plus en détails, en référence aux figures 14 à 22, l'organiseur optique proprement dit 115.

Comme on le voit sur les figures 14 et 16, cet organiseur optique est fixé sur le fond plat 81 de la boîte 8 par des vis auto-taraudeuses 121.

Il se compose d'un piédestal en matière plastique 122, à bords 123 et 124 arrondis comme mentionné précédemment, et de un à plusieurs modules porte-cassettes, ici deux modules superposés 135 et 136.

La forme arrondie du piédestal 122 est particulièrement bien visible sur les figures 17 et 21.

Du côté aval, c'est-à-dire vers la droite sur le dessin, ce piédestal 122 comporte une plate forme horizontale en porte-à-faux 130 (figures 14 à 19, et 21), dont le plan délimite le niveau supérieur de l'espace de lovage 126, et qui sert (figures 14 et 16) à soutenir la cassette inférieure 117 de l'empilage 117-119 lorsque cette dernière est rabattue en position horizontale.

Comme on le voit sur les figures 17 à 21, le piédestal 122 est percé de deux orifices 137 de réception, par enfichage dans ces orifices 137, des deux montants tubulaires 138, 139 du premier module porte-cassettes 135.

Les orifices 137 sont inclinés à environ 45 degrés par rapport à l'horizontale, comme représenté au dessin. Ce sont des orifices borgnes dont le fond est garni d'un insert ou écrou métallique 140 de réception d'une vis métallique 141 de fixation, sur ce piédestal 122, des deux modules gigogne 135 et 136.

Sur la figure 18, où deux modules 135 et 136 sont installés sur le piédestal 122, la vis de maintien 141 est plus longue que celle de la figure 19, où seul le module inférieur 135 est installé sur ce piédestal.

En outre, le piédestal est garni, dans une cavité réceptrice 142, d'une protubérance verticale 143 en forme de canne qui, comme on l'expliquera ci-après, sert au maintien de la cassette inférieure 117 en sa position verticale. Ce maintien s'effectue par enclipsage d'un axe transversal 144 de la cassette 117 sur l'extrémité libre, arquée de manière conjuguée, de la protubérance 143.

Les modules porte-cassettes 135 et 136, dont le nombre n'est d'ailleurs pas limité à deux, sont identiques et leurs montants latéraux tubulaires 138, 139 sont conformés non seulement pour que le premier module 135 puisse s'enficher dans le piédestal 122, mais encore pour que tous ces modules 135, 136, ..., puissent s'enficher l'un sur l'autre de manière gigogne, la direction commune d'enfichage faisant, comme mentionné ci-dessus pour le module inférieur 135, un angle d'environ 45 degrés par rapport à l'horizontale.

Dans le cas de figure ici représenté, chaque module 135, 136, ..., de l'empilage est conçu pour recevoir, dans des orifices 147 prévus respectivement à cet effet dans des joues latérales respectives 145, les axes de rotation respectifs 146 de deux cassettes 117, 118 et 119, 120 de stockage des épissures et sur-longueurs de fibres. Il va de soi que chacun de ces modules pourrait être conçu pour recevoir soit une seule cassette, soit à contrario plus de deux cassettes.

Comme on le voit bien sur les figures 14, 16, et 20, chacun de ces modules est garni, de manière semblable au piédestal 122, de deux protubérances verticales en forme de canne, respectivement 148, 149 et 150, 151, de réception par enclipsage des axes 144 des autres cassettes 118, 119, 120, ..., de l'empilage de cassettes.

En outre, ces modules sont munis chacun, en nombre égal à celui des protubérances verticales 148 à 151, de dents horizontales 152 à 155 de maintien, de nouveau par enclipsage de l'axe 144 de chaque cassette sur sa dent respective 1552 à 155, de chaque cassette 117 à 120 en sa position horizontale.

Chaque cassette 117-120 peut pivoter, autour de son axe de rotation 146, de 90 degrés entre une position « horizontale » où elle est parallèle au plan 128 du fond 81 du boîtier, et une position « verticale » où elle a basculé de 90 degrés dans le sens direct trigonométrique.

Sur les figures 14 et 16, les trois premières cassettes 117, 118, 119 de l'empilage sont en cette position « horizontale », et elles sont très avantageusement maintenues dans cette position par l'encliquetage amovible de leur axe de maintien 144 sur la dent de maintien respective 152 à 155, tandis qu'à contrario la dernière cassette 120 est en sa position « verticale », et est très avantageusement maintenue en cette position par l'encliquetage amovible de son axe de maintien 144 sur la canne de maintien respective 150.

A noter que, ce qui en soi n'est pas nouveau, les cassettes 117-120 de l'empilage sont décalées horizontalement, d'une cassette 117 à la suivante 118, d'une quantité égale, à légèrement supérieure, à l'épaisseur d'une cassette, définissant ainsi des marches d'escalier dont l'inclinaison par rapport à l'horizontale est égale, à légèrement inférieure compte tenu d'un léger jeu, à 45 degrés.

En conséquence, l'axe d'enfichage 156 (figures 20 et 21) des modules gigogne 135, 136, ..., dans le piédestal 122 est lui aussi incliné d'environ 45 degrés, dans le sens horaire, par rapport à l'horizontale.

Cette formation, en soi bien classique, en « marches d'escalier » des cassettes 117-120 de l'empilage permet de les faire chacune pivoter, comme représenté en figures 14 et 16, de 90 degrés entre une position horizontale d'extrémité et une position verticale d'extrémité, où elles sont alors, selon la présente invention, maintenues dans l'une ou l'autre de ces deux positions, par des moyens d'encliquetage amovible.

Bien entendu, ces cassettes pourraient aussi, dans une autre forme de réalisation, pivoter sur un angle supérieur à 90 degrés. Il suffirait alors de prévoir un décalage relatif nettement supérieur à l'épaisseur d'une cassette, ce qui définirait un axe d'inclinaison 156 nettement inférieur à 45 degrés, dans le sens horaire, par rapport à l'horizontale.

Les cassettes de stockage, telle que la cassette 117 que l'on voit bien en perspective sur les figures 17 et 22 comportent, classiquement en soi, en espace 157 de stockage des épissures ainsi qu'un espace 158 de stockage, par enroulement (ou « lovage ») autour d'un mandrin 159, des sur-longueurs de fibres optiques.

Selon une petite particularité, les petits couloirs 160, 161 d'entrée ou de sortie des fibres optiques dénudées se referment sur ces fibres optiques par un couvercle respectif 162, 163 qui est fixé, de moulage et d'un côté, à la cassette 117 par une charnière souple 164 (figure 22). Classiquement, chacun de ces couloirs d'entrée / sortie est rempli d'un tampon en mousse (non représenté) qui pince et protège les fibres dénudées.

En outre, comme mentionné précédemment, ces cassettes sont équipées d'un axe de rotation 146 et d'un axe d'encliquetage 144 en ses deux positions extrêmes de basculement, cet axe 144 étant parallèle à l'axe de rotation 146.

La cassette de lovage 129, (figures 17 et 23 en particulier), destinée au stockage de fibres en attente, comporte uniquement un espace de stockage 165 qui est équipé d'un mandrin central 166 autour duquel on vient enrouler les fibres en attente.

Cette cassette de lovage 129 se fixe, selon Figure 14, sur le fond de boîtier 81 au moyen d'une vis auto-taraudeuse 167.

Comme il va de soi, l'invention n'est pas limitée à l'exemple de réalisation qui est décrit et représenté.

C'est ainsi en particulier que l'encombrement en hauteur du couvercle 82 va dépendre du nombre de modules 135, 136, ..., qui sont enfichables l'un sur l'autre et sur le piédestal 122.

C'est ainsi également que, au lieu de se fixer, l'un sur l'autre et sur le piédestal 122, par une vis 141 et un insert associé 140 (figures 18 et 19), les modules gigogne 135,136,..., et le piédestal 122, pourraient être, quant à leurs dimensions, conçus pour que ces modules s'enfichent, l'un sur l'autre et sur le piédestal 122, par emmanchement, et coincement, à force.

## Revendications

1. Dispositif étanche destiné au raccordement de câbles (101-104) à fibres optiques, ce dispositif se présentant sous la forme d'un boîtier étanche (8), dit boîtier à « organiseur optique » (115), qui comporte un fond (81) sensiblement plat et un couvercle (82), et qui inclut des moyens pour réaliser les quatre fonctions suivantes :
- amarrage et étanchéité d'entrée des câbles optiques (101-104),
- orientation des fibres optiques (125) vers l'organiseur optique (115),
- stockage, dans des cassettes pivotantes (117-120) équipant cet organiseur optique (115), des épissures et des sur-longueurs de fibres optiques (125), et
- stockage des fibres optiques en attente, en particulier des fibres optiques d'un « câble en passage »,
l'organiseur optique (115) comportant
- un piédestal (122) en matière plastique et possèdant une paroi externe (123, 124), orthogonale au fond (128) du boîtier (8), qui a une forme arrondie pour guider, sans les blesser, les fibres optiques (125) éventuellement dénudées desdits câbles qui passent alors de part et d'autre de ce piédestal, et qui est fixé au fond (81) du boîtier ainsi que plusieurs modules (135, 136) porte-cassettes de stockage d'épissures et sur-longueurs (117-120) montés sur le piédestal (122), et des cassettes de stockage d'épissures et surlongueurs (117-120)
chaque module (135, 136) recevant une à quelques cassettes (117-120) de façon que chaque cassette puisse basculer d'au moins 90 degrés autour de sa base (146),
ces modules (135, 136) étant empilables de manière gigogne et selon une direction (156) qui est suffisamment inclinée par rapport au plan de fond (128) du boîtier (8) pour autoriser ledit basculement de chaque cassette, le piédestal recevant par enfichage lesdits modules (135, 136) qui sont empilés par enfichage gigogne l'un sur l'autre avec un décalage en escalier d'une cassette à la suivante de l'empilage (117-120), ce décalage se faisant selon un angle de décalage d'environ 45 degrés qui correspond à une longueur de marche d'escalier sensiblement égale à l'épaisseur d'une cassette pour autoriser ainsi le pivotement à 90 degrés de chaque cassette de l'empilage (117-120),
ces modules (135, 136) comportant chacun des moyens d'enclipsage (143, 152) pour bloquer chaque cassette en deux positions, dont une première position de blocage où la cassette est parallèle au plan (128) du fond du boîtier, et une deuxième position de blocage où cette cassette a tourné, autour de son axe d'articulation (146) sur son bloc de support, d'un quart de tour pour être alors orthogonale à ce plan du fond (81) du boîtier (8), et
- le piédestal (122) et le fond de boîtier (81) étant conçus pour délimiter, entre le piédestal et le côté de boîtier (127) qui est opposé aux entrées de câbles (111-114) un second espace libre (126) apte à recevoir des fibres en attente, au moins une portion de ce second espace libre étant situé sous la première cassette (117), de l'empilage le plus proche du fond du boîtier lorsque cette cassette (117) est en sa première position précitée, alors en porte-à-faux sur ce second espace libre (126), des moyens de soutien (130) de cette première cassette (117) en cette position de porte-à-faux étant prévus en conséquence sur ledit piédestal (122),
les bords (204, 205) du fond (81) de boîtier (8) étant de hauteur suffisamment limitée pour autoriser le libre accès latéral à toutes les cassettes (117-120) de l'empilage,
le dispositif comportant en outre:
- pour chaque câble (101-104), un dispositif (111-114) d'entrée étanche et d'amarrage des mèches de renfort (5, 6, 7), qui se monte préalablement sur ce câble avant que ce dernier ne soit introduit dans le boîtier (8), l'amarrage de la gaine extérieure (2) du câble se faisant alors directement sur ce dispositif d'entrée étanche et en amont de ses moyens d'étanchéité (19, 20) par rapport à la direction d'insertion dans le passage d'entrée du boîtier (6)
ces dispositifs d'entrée étanche (111-114) étant ensuite tous reçus, par enfichage, sur un même côté (107) du boîtier pour alors s'y verrouiller par simple clavetage (32),
ces dispositifs d'entrée étanche respectifs (111-114) étant tous alignés, en épi, sur un même côté (107) du boîtier et étant positionnés dans un plan (128) parallèle au plan du fond (81) du boîtier (8),
- et où l'organiseur optique (115) est séparé de ces dispositifs d'entrée par un espace libre (116) de transition des fibres optiques dégagées (125).

2. Dispositif selon la revendication 1, **caractérisé en ce que** chacun de ces dispositifs respectifs d'entrée de câble comprend :
- à l'avant : une semelle d'amarrage rigide (16) comprenant des orifices (49) ou fentes (38, 39) d'introduction des mèches de renfort, centrales (7) et/ou latérales (5, 6), du câble, ces orifices ou fentes coopérant chacun avec un organe de serrage (40, 41, 50), agissant typiquement par rotation d'une vis (44, 45, 51), de la ou des mèches (5, 6, 7) qu'il reçoit,
- à l'arrière : un écrou (24) de serrage de presse-étoupe (20) qui est en outre conformé (26, 27) pour recevoir un organe (30, 31) de bridage de la gaine extérieure (2) du câble optique (101), et
- entre l'avant et l'arrière : un corps tubulaire d'étanchéité (17) dont la partie avant (68) s'encastre de manière télescopique dans ladite semelle d'amarrage (16), des moyens (18) de solidarisation de ce corps d'étanchéité (17) et de cette semelle d'amarrage (16) en position encastrée étant prévus, la partie arrière (20) de ce corps tubulaire (17) formant, en association avec une bague d'étanchéité (23), le presse-étoupe d'étanchéité (21, 22) complémentaire dudit écrou de serrage (24), ce presse-étoupe venant réaliser l'étanchéité par serrage sur la gaine extérieure (2) du câble,
ce corps d'étanchéité recevant par ailleurs un moyen (19) de réalisation de l'étanchéité par rapport au passage d'entrée (11) du boîtier (8), et comportant par ailleurs un organe de butée (63) qui est destiné à limiter, par coopération avec une forme complémentaire (62) dudit passage d'entrée (11), l'introduction du dispositif d'entrée étanche (16, 17, 24) par sa partie avant à travers le passage d'entrée (11), la position de butée (62, 63) étant alors telle que la tête (35, 60) du dispositif émerge à l'intérieur du boîtier (8) le moyen de clavetage (32) étant à ce stade prévu pour verrouiller le dispositif en cette position.

3. Dispositif selon la revendication 1 ou 2, **caractérisé en ce que** ledit second espace libre (126) est conçu pour recevoir au moins une cassette (129) de lovage de fibres en attente.

4. Dispositif selon la revendication 1 ou 2, **caractérisé en ce que** lesdites cassettes de stockage (117-120) possèdent chacune un axe de rotation (146) auquel est parallèle un axe (144) qui sert au maintien amovible de la cassette, dans une de ses deux positions extrêmes de basculement, par enclipsage dans des formes conjuguées (143, 148-151) de l'organiseur optique (115).

5. Dispositif selon la revendication 4, **caractérisé en ce que**, pour le maintien amovible dans l'autre position extrême de basculement de chaque cassette (117-120), il est prévu, sur l'organiseur optique (115), des dents d'enclipsage (152-155) de cet axe d'enclipsage (144).

6. Dispositif selon l'une quelconque des revendications précédentes, **caractérisé en ce que**, sur chaque cassette de stockage (117-120), les petits couloirs (160, 161) d'entrée ou de sortie des fibres optiques dénudées se referment sur ces fibres optiques par un couvercle respectif (162, 163) qui est fixé, de moulage et d'un côté, à la cassette (117) par une charnière souple (164).

7. Dispositif selon la revendication 1 ou 2, **caractérisé en ce que** le couvercle (82) du boîtier (8) se solidarise au fond (81) de ce boîtier au moyen de fermetures à grenouillère (108).

8. Dispositif selon l'une quelconque des revendications précédentes, **caractérisé en ce que** les modules gigogne (135, 136), et le piédestal (122), sont, quant à leurs dimensions, conçus pour que ces modules s'enfichent, l'un sur l'autre et sur le piédestal (122), par emmanchement, et coincement, à force.

## Claims

1. A watertight device designed for interconnecting optical fiber cables (101-104), the device being in the form of a watertight box (8) referred to as an "optical organizer" box which is made up of a substantially flat bottom (81) and of a lid (82), and which includes means for performing the following four functions:
- securing and sealing the optical fibers (101-104) in inlets;
- directing the optical fibers (125) towards the optical organizer proper (115);
- storing the splices and the surplus lengths of optical fiber (125) in pivotally-mounted cassettes (117 to 120) equipping said organizer; and
- storing standby optical fibers, in particular optical fibers of a "through cable";
the optical organizer (115) comprising a pedestal (122) made of a plastics material and having an outside wall (123, 124) that is orthogonal to the bottom (128) of the box (8), which wall is rounded to guide the optionally stripped optical fibers (125) of said cables without damaging them on either side of said pedestal, said pedestal being fixed to the bottom (81) of the box, and also one or more cassette-holding modules (135, 136) for holding cassettes (117-120) for storing splices and surplus lengths mounted on the pedestal (122), and cassettes for storing splices and surplus lengths (117 - 120) ;
■ each module (135, 136) receiving one or more cassettes (117-120) so that each cassette can tilt through at least 90 degrees about its base (146);
■ said modules (135, 136) being stackable in nested manner and in a direction (156) that slopes relative to the plane of the bottom (128) of the box (8) sufficiently to enable each cassette to tilt in this way;
the pedestal receiving in plug-in manner said modules (135, 136), which are superposable by plugging into one another in nested manner with a stepped offset being provided from one cassette to the next in the stack (117-120), this offset being provided at an offset angle of about 45 degrees which corresponds to a step length substantially equal to the thickness of a cassette, so that it is possible to pivot each cassette of the stack (117-120) through 90 degrees; these modules (135, 136) being provided with clipping means (143, 152) for locking each cassette in two positions, a first locking position in which the cassette is parallel to the plane (128) of the bottom of the box, and a second locking position in which the cassette has been rotated about its hinge pins (146) and on its support block through one fourth of a turn so that it is orthogonal to the plane of the bottom of the box; and
the pedestal (122) and the box bottom (81) being designed to delimit a second empty space (126) between the pedestal and the box side (127) that is opposite from the cable inlets (111-114), which second empty space is suitable for receiving standby fibers, at least a portion of the second empty space being situated under the first cassette (117) at the bottom of the stack when said cassette (117) is in its first above-mentioned position, and is then cantilevered out over said second empty space (126), support means (130) for supporting said first cassette (117) in this cantilevered-out position being provided accordingly on said pedestal (122) ;
the edges (204, 205) of the bottom (81) of the box (8) being of a height that is sufficiently small as to enable all of the cassettes (117-120) in the stack to be accessed freely from the sides ;
the device further comprising for each cable (101-104), a device (111-114) for providing a watertight cable inlet and for securing the strength members (5, 6, 7) of the cable, which inlet device is fitted to the cable prior to inserting said cable into the box (8), the outer sheath (2) of the cable then being secured directly on said watertight inlet device and upstream from its sealing means (19, 20) in regard of its insertion direction of the inlet passageway of the box (8) ;
■ said watertight inlet devices (111-114) then being received by being plugged into the same side (107) of the box and then being locked therein merely by keying (32);
■ said respective watertight inlet devices (111-114) being disposed side-by-side in row abreast on the same side (107) of the box, and that being positioned in a plane (128) parallel to the plane of the bottom (81) of the box (8) ;
and where the optical organizer (115) is separated from these inlet devices by an empty transit space (116) through which the broken-out optical fibers (125) pass.

2. A device according to claim 1, **characterized in that** each of these respective inlet device comprises :
- at the front: a rigid securing solepiece (16) provided with orifices (49) or slots (38, 39) into which central strength members (7) and/or side strength members (6, 5) of the cable are inserted, each of these orifices or slots co-operating with a clamping member (40, 41, 50) typically acting by a screw (44, 45, 51) being rotated to clamp the strength member(s) (5, 6, 7) that it receives;
- at the rear: a nut (24) for clamping a stuffing box (20), which nut is also shaped (26, 27) to receive a retaining member (30, 31) for retaining the outer sheath (2) of the optical cable (101); and
- between the front and the rear: a sealing tubular body (17) whose front portion (68) engages telescopically into said securing solepiece (16), means (18) being provided for fixing the sealing body (17) to the securing solepiece (16) in the engaged position, the rear portion (20) of the tubular body (17) co-operating with a sealing ring (23) to form the sealing stuffing box (21, 22) that is complementary to said clamping nut (24), the stuffing box achieving the sealing by clamping on the outer sheath (2) of the cable;
the sealing body also receiving means (19) for providing the sealing relative to the inlet passageway (11) in the box (8), and further including an abutment member (63) which is designed to co-operate with a complementary shape (62) of said inlet passageway (11) to limit the insertion of the watertight inlet device (16, 17, 24) by its front part through said inlet passageway (11), the abutment position (62, 63) then being such that the head (35, 60) of the device emerges inside the box (8), keying means (32) then being provided for locking the device in this position.

3. A device according to claim 1 or 2, **characterized in that** said second empty space (126) is organized to receive at least one cassette (129) for coiling standby fibers.

4. A device according to one of claims 1 or 2, **characterized in that** each of said storage cassettes (117-120) has mutually-aligned hinge pins (146) which are parallel to a pin (144) that serves to hold the cassette releasably in one or its two end-of-tilt positions, by clipping into corresponding shapes (143, 148 to 151) in the optical organizer (115).

5. A device according to claim 4, **characterized in that**, to hold each cassette (117-120) releasably in the other end-of-tilt position, clipping teeth (152-155) are provided on the optical organizer (115) to clip onto the clipping pin (144).

6. A device according to any one of the preceding claims, **characterized in that**, on each storage cassette (117-120), the small inlet and outlet corridors (160, 161) for the stripped optical fibers close onto said optical fibers by means of respective covers (162, 163), each of which is fixed to one side of the cassette (117) via a flexible hinge (164) by being integrally molded with the cassette.

7. A device according to claim 1 or 2, **characterized in that** the lid (82) of the box (8) is fixed to the bottom (81) of the box by means of toggle fasteners (108).

8. A device according to any one of the preceding claims, **characterized in that** the nestable modules (135, 136), and the pedestal (122) are, as regards their dimensions, designed so that the modules plug into one another and into the pedestal (122) by being mutually engaged by force-fitting.

## Patentansprüche

1. Dichte Verbindungsvorrichtung für faseroptische Kabel (101-104), wobei die Vorrichtung in Form eines dichten Gehäuses (8) vorliegt, welches als Gehäuse mit "optischem Organisator" (115) bezeichnet wird, das einen im wesentlichen ebenen Boden (81) und einen Deckel (82) umfasst, und welche Einrichtungen zum Umsetzen der folgenden vier Funktionen aufweist:
- Befestigung und Eintrittsabdichtung der optischen Kabel (101-104);
- Ausrichten der optischen Fasern (125) auf den optischen Organisator (115);
- Aufnehmen der Spleißungen und der Überlängen der optischen Fasern (125) in schwenkbaren Kassetten (117-120), mit welchen der optische Organisator (115) versehen ist, und
- Aufnehmen von optischen Fasern in Bereitschaft, insbesondere von optischen Fasern eines "Durchgangskabels",
wobei der optische Organisator (115) umfasst:
- einen Sockel (122) aus Kunststoff, der eine zu dem Boden (128) des Gehäuses (8) orthogonale Außenwand (123, 124) aufweist, welche eine abgerundete Form hat, um die eventuell abisolierten optischen Fasern (125) der Kabel, die sich von der einen zur anderen Seite des Sockels erstrecken, ohne Beschädigung derselben zu führen, und der an dem Boden (81) des Gehäuses befestigt ist, sowie mehrere an dem Sockel (122) befestigte Trägermodule (135, 136) für Kassetten (117-120) zum Aufnehmen von Spleißungen und Überlängen, und
- wobei jedes Modul (135, 136) eine bis mehrere Kassetten (117-120) derart aufnimmt, dass jede Kassette um mindestens 90° um ihre Basis (146) schwenken kann,
- wobei diese Module (135, 136) ineinandergeschachtelt und in einer Richtung (156) stapelbar sind, die in bezug auf die Ebene des Bodens (128) des Gehäuses (8) ausreichend schräg ist, um das Schwenken jeder der Kassetten zu ermöglichen,
- wobei der Sockel die Module (135, 136) durch Einstecken aufnimmt, welche durch Ineinanderstecken mit einem treppenförmigen Versatz von einer Kassette (117-120) des Stapels zur nächsten aufeinandergestapelt sind, wobei der Versatz mit einem Versatzwinkel von ungefähr 45 Grad erfolgt, der einer Treppenstufenlänge entspricht, die im wesentlichen gleich der Dicke einer Kassette ist, um so das Schwenken jeder der Kassetten des Stapels (117-120) um 90 Grad zu ermöglichen,
- wobei jedes der Module (135, 136) Einhakeinrichtungen (143, 152) zum Verriegeln jeder Kassette in zwei Positionen aufweist, nämlich einer ersten Verriegelungsposition, in welcher die Kassette parallel zur Ebene (128) des Bodens des Gehäuses ist, und einer zweiten Verriegelungsposition, in welcher die Kassette um ihre Gelenkachse (146) auf ihrem Stützblock um eine Vierteldrehung geschwenkt ist, so dass sie zu der Ebene des Bodens (81) des Gehäuses (8) orthogonal verläuft, und
- wobei der Sockel (122) und der Boden (81) des Gehäuses derart ausgebildet sind, dass sie zwischen dem Sockel (122) und der Seite (127) des Gehäuses, welche dem Kabeleingang (111-114) gegenüberliegt, einen zweiten Freiraum (126) begrenzen, der in der Lage ist, Fasern in Bereitschaft aufzunehmen, wobei sich mindestens ein Bereich des zweiten Freiraums unter der ersten Kassette (117) des Stapels befindet, welche dem Boden des Gehäuses am nächsten ist, wenn sich diese Kassette (117) in ihrer vorgenannten ersten Position, das heißt über den zweiten Freiraum (126) überhängend, befindet, wobei infolgedessen an dem Sockel (122) Einrichtungen (130) zum Stützen dieser ersten Kassette (117) in dieser überhängenden Position vorgesehen sind,
- wobei die Ränder (204, 205) des Bodens (81) des Gehäuses (8) eine ausreichend begrenzte Höhe haben, um einen freien seitlichen Zugang zu sämtlichen Kassetten (117-120) des Stapels zu ermöglichen,
wobei die Vorrichtung ferner aufweist:
- für jedes Kabel (101-104) eine Vorrichtung (111-114) für den dichten Eintritt und die Befestigung der Verstärkungsschnüre (5, 6, 7), die vorab an dem Kabel angebracht wird, bevor Letzteres in das Gehäuse (8) eingeführt wird, wobei die Befestigung der Außenhülle (2) des Kabels somit direkt an der Vorrichtung für den dichten Eintritt und in bezug auf die Richtung des Einführens in den Eintrittsdurchgang des Gehäuses (8) stromaufwärts ihrer Dichteinrichtungen (19, 20) erfolgt,
- wobei die Vorrichtungen für den dichten Eintritt (111-114) anschließend sämtlich durch Einstecken auf der selben Seite (107) der Buchse aufgenommen werden, um dort durch einfaches Verkeilen (32) verriegelt zu werden,
- wobei die jeweiligen Vorrichtungen für den dichten Eintritt (111-114) schräg auf der selben Seite (107) des Gehäuses ausgerichtet und in einer zur Ebene des Bodens (81) des Gehäuses (8) parallelen Ebene (128) positioniert sind,
- und wobei der optische Organisator (115) von diesen Eintrittsvorrichtungen durch einen Freiraum (116) für den Durchtritt von freien optischen Fasern (125) getrennt ist.

2. Vorrichtung nach Anspruch 1, **dadurch gekennzeichnet, dass** jede der jeweiligen Kabeleingangsvorrichtungen aufweist:
- im vorderen Bereich: eine starre Befestigungsklemme (16) mit Öffnungen (49) oder Schlitzen (38, 39) zum Einführen der mittleren (7) und/oder seitlichen (5, 6) Verstärkungsschnüre des Kabels, wobei die Öffnungen oder Schlitze jeweils mit einem üblicherweise durch Drehen einer Schraube (44. 45, 51) wirkenden Klemmelement (40, 41, 50) für die Schnur oder die Schnüre (5, 6, 7), welche es aufnimmt, zusammenwirken,
- im hinteren Bereich: eine Mutter (24) zum Klemmen der Stopfbuchse (20), die ferner zum Aufnehmen des Elements (30, 31) zum Spannen des äußeren Mantels (2) des optischen Kabels (101) ausgebildet ist (26, 27),
- zwischen dem vorderen und dem hinteren Bereich: einen rohrförmigen Dichtkörper (17), dessen vorderer Teil (68) teleskopartig in die Befestigungsklemme (16) eingespannt ist, wobei Einrichtungen (18) zum Verbinden des Dichtkörpers (17) und der Befestigungsklemme (16) in der eingespannten Position vorgesehen sind, und wobei der hintere Teil (20) des rohrförmigen Körpers (17) zusammen mit einem Dichtring (23) die zu der Klemmmutter (24) komplementäre Dichtungsstopfbuchse (21, 22) bildet, welche die Abdichtung durch Klemmung auf den äußeren Mantel (2) des Kabels bewirkt,
wobei der Dichtkörper ferner eine Einrichtung (19) zur Abdichtung in bezug auf den Eintrittsdurchlass (11) in das Gehäuse (8) umfasst, und ferner ein Anschlagelement (63) aufweist, das durch Zusammenwirken mit einer komplementären Ausgestaltung (62) des Eintrittsdurchlasses (11) das Einführen des vorderen Teils der Eintrittsdichtvorrichtung (16, 17, 24) durch den Eintrittsdurchlass (11) begrenzt, wobei der Anschlag (62, 63) derart positioniert ist, dass der Kopf (35, 60) der Vorrichtung in das Innere des Gehäuses (8) ragt, wobei zu diesem Zeitpunkt die Keilverbindungseinrichtung (32) vorgesehen wird, um die Vorrichtung in dieser Position zu verriegeln.

3. Vorrichtung nach Anspruch 1 oder 2, **dadurch gekennzeichnet, dass** der zweite Freiraum (126) zum Aufnehmen mindestens einer Kassette (129) zum Aufnehmen von in Bereitschaft befindlichen Fasern ausgebildet ist.

4. Vorrichtung nach Anspruch 1 oder 2, **dadurch gekennzeichnet, dass** die Aufnahmekassetten (117-120) jeweils eine Drehachse (146) aufweisen, zu der eine Achse (144) parallel verläuft, welche durch Einstecken in komplementäre Formen (143, 148-151) des optischen Organisators (115) der Entnehmbarkeit der Kassette in einer ihrer beiden Schwenkendpositionen dient.

5. Vorrichtung nach Anspruch 4, **dadurch gekennzeichnet, dass** zur Entnehmbarkeit in der anderen Schwenkendposition jeder Kassette (117-120) an dem optischen Organisator (115) Einsteckzähne (152-155) der Einsteckachse (144) vorgesehen sind.

6. Vorrichtung nach einem der vorhergehenden Ansprüche, **dadurch gekennzeichnet, dass** bei jeder Aufnahmekassette (117-120) die kleinen Einlässe oder Auslässe (160, 161) für die abisolierten optischen Fasern über diesen optischen Fasern mittels eines jeweiligen Deckels (162, 163) geschlossen sind, welcher durch Anformen auf einer Seite durch ein biegsames Scharnier (164) an der Kassette (117) befestigt ist.

7. Vorrichtung nach Anspruch 1 oder 2, **dadurch gekennzeichnet, dass** der Deckel (82) des Gehäuses (8) mit dem Boden (81) der Buchse mittels Bügelverschlüssen (108) fest verbunden ist.

8. Vorrichtung nach einem der vorhergehenden Ansprüche, **dadurch gekennzeichnet, dass** die ineinandergeschachtelten Module (135, 136) und der Sockel (122) hinsichtlich ihrer Abmessungen derart ausgebildet sind, dass die Module durch Aufpressen und Klemmen mit Kraft aufeinander und auf den Sockel (122) gesteckt sind.
